# EUROPÄISCHE PATENTANMELDUNG

(11) **EP 4 442 374 A1**
(43) Veröffentlichungstag der Anmeldung: **09.10.2024**
(21) Anmeldenummer: 24164542.3
(22) Anmeldetag: 19.03.2024
(51) Int. Cl.: B07C 5/02, B07C 5/34

(54) **BELADEVERFAHREN UND BELADESTATION FÜR FÖRDERBEHÄLTER**

(30) Priorität: 04.04.2023 DE 102023203126
(71) Anmelder: Dürkopp Fördertechnik GmbH, 33719 Bielefeld (DE)
(72) Erfinder: Völker, Sigurd, 32602 Vlotho (DE)
(74) Vertreter: Rau, Schneck & Hübner Patentanwälte Rechtsanwälte PartGmbB

(57) **Zusammenfassung**

Ein Beladeverfahren für Förderbehälter (5) mit Waren (15, 16) aus einem Warenstrom umfasst ein Zuführen des Warenstroms an einen Vereinzelungsplatz (13), wobei der Warenstrom erste Waren (15) und zweite Waren (16) umfasst, wobei die ersten Waren (15) für das Beladen in die Förderbehälter (5) zulässig sind und wobei die zweiten Waren (16) für das Beladen in die Förderbehälter (5) unzulässig sind, ein Vereinzeln der Waren (15, 16), ein automatisiertes Erkennen der vereinzelten Waren (15, 16), ein Ausschleusen der zweiten Waren (16) aus dem Warenstrom und ein Beladen der Förderbehälter (5) mit den ersten Waren (15).

## Beschreibung

Der Inhalt der deutschen Patentanmeldung DE 10 2023 203 126.4 wird durch Bezugnahme hierin aufgenommen.

Die Erfindung betrifft ein Beladeverfahren und eine Beladestation für Förderbehälter.

In Förderanlagen, in welchen Artikel in Förderbehältern gefördert, sortiert und gegebenenfalls kommissioniert werden, können Waren vorhanden sein, die als unzulässig für die weitere Förderung deklariert werden, beispielsweise weil sie zur Verarbeitung in der Förderanlage und/oder zu dem jeweiligen Bearbeitungszeitpunkt nicht geeignet oder nicht vorgesehen sind. Aus dem Stand der Technik sind verschiedene Lösungen bekannt, um derart unzulässige Waren zu handhaben. Beispielsweise werden alle Waren in die Förderbehälter geladen und in Kommissionierläufen in zulässige und unzulässige Waren aufgeteilt. Dies führt zu einem erhöhten Kommissionieraufwand.

Alternativ werden sämtliche Waren mittels der Förderbehälter zu einem Packplatz gefördert und dort die unzulässigen Waren aussortiert. Diese Lösung erfolgt zusätzlichen Sortieraufwand am Packplatz und belastet die Förderanlage mit vermeidbarer Förderleistung.

Eine Aufteilung der Waren kann alternativ unmittelbar nach dem Wareneingang erfolgen. Diese Aufteilung mindert die Produktivität des Förderverfahrens durch Unterbrechungen und verlangsamt den Gesamtprozess erheblich.

Die vorstehenden Lösungsansätze erfordern entweder einen hohen technischen Aufwand, erzeugen Komplexität und/oder mindern die Produktivität des Gesamtprozesses.

Es ist die Aufgabe der vorliegenden Erfindung, das Fördern eines Warenstroms, der unzulässige Waren beinhaltet, zu optimieren, indem insbesondere unzulässige Waren unkompliziert und insbesondere automatisiert ausschleusbar sind, so dass insbesondere die Produktivität der Warenförderung, also die Warendurchsatzrate, nicht beeinträchtigt wird.

Diese Aufgabe ist erfindungsgemäß gelöst durch ein Beladeverfahren mit den in Anspruch 1 angegebenen Merkmalen und mit einer Beladestation mit den in Anspruch 11 angegebenen Merkmalen.

Erfindungsgemäß wurde erkannt, dass ein Aussortieren unzulässiger Waren aus einem Warenstrom vor dem Beladen der Waren in Förderbehälter erfolgt. Die Waren, die unsortiert und nicht vereinzelt als Warenstrom an einen Vereinzelungsplatz zugeführt werden, werden zunächst vereinzelt und danach automatisiert erkannt. Erste Waren, die für das Beladen in die Förderbehälter zulässig sind, werden in die Förderbehälter beladen. Zweite Waren, die für das Beladen in die Förderbehälter unzulässig sind, werden aus dem Warenstrom ausgeschleust. Die zweiten Waren werden insbesondere deshalb als unzulässig qualifiziert, weil sie für eine weitere Förderung in der Förderanlage und/oder zu dem Zeitpunkt des Erkennens in der Förderanlage nicht geeignet oder nicht dafür vorgesehen sind. Eine Unzulässigkeit liegt beispielsweise dann vor, wenn die zweiten Waren unzulässige Merkmale aufweisen wie beispielsweise zu große oder zu kleine Abmessungen, zu großes oder zu kleines Gewicht, die Nichtlesbarkeit von Identifizierungscodes und/oder RFID-Tags und/oder für die Förderung unzulässige artikelspezifische Eigenschaften, die insbesondere in den Stammdaten der zweiten Waren hinterlegt und/oder abgespeichert sind, wie beispielsweise Zerbrechlichkeit, Druckempfindlichkeit, spitze Kanten, Gefährlichkeit beim Transport, starke magnetische Eigenschaften, Gefahrstoffe, beispielsweise Lithium-Ionen-Batterien. Zusätzlich oder alternativ können die zweiten Waren auch deshalb unzulässig sein, weil die Waren zu dem Zeitpunkt, wenn sie an dem Vereinzelungsplatz zugeführt werden, noch nicht verarbeitet werden sollen, aber zu einem späteren Zeitpunkt. Dies ist insbesondere dann der Fall, wenn die Waren batchorientiert abgearbeitet werden. Das bedeutet, dass die Waren für Gruppen von Aufträgen in einer gemeinsamen Welle bearbeitet werden. Wenn eine zweite Ware nicht zu der gerade im System verarbeiteten aktiven Welle gehört, kann sie als unzulässig qualifiziert werden.

Das Ausschleusen der zweiten Waren aus dem Warenstrom erfolgt vor dem Beladen der Förderbehälter. Das bedeutet insbesondere, dass ein reduzierter Warenstrom nach dem Ausschleusen zu einem Beladeplatz gelangt. Das Ausschleusen der zweiten Waren erfolgt nach dem Vereinzeln. Es wurde insbesondere erkannt, dass eine Vereinzelungsleistung, also die Durchsatzrate der Waren beim Vereinzeln, größer ist als eine Beladeleistung, also der Warendurchsatz beim Beladen der Förderbehälter. Insbesondere beträgt die Vereinzelungsleistung mindestens das 1,05-fache der Beladeleistung, insbesondere das 1,1-fache, insbesondere das 1,2-fache, insbesondere das mindestens 1,5-fache und insbesondere mindestens das 2,0-fache. Obwohl vor dem Beladen das Vereinzeln der Waren und das Ausschleusen der zweiten Waren aus dem Warenstrom stattfindet, ist die Beladeleistung nicht reduziert. Der bei dem Beladeplatz ankommende, um die zweiten Waren reduzierte Warenstrom weist eine Warendichte auf, die das Beladen mit maximal möglicher Beladeleistung, die durch den Beladeplatz gegeben wird, ermöglicht. Das Beladen der Förderbehälter kann mit der theoretisch maximal möglichen Beladeleistung erfolgen. Das Aussortieren der zweiten Waren ist unkompliziert in den Warenstrom integriert, mit dem in einer Förderanlage typischerweise ohnehin vorhandenen technischen Anlagen umsetzbar und erzeugt keine zusätzliche Komplexität.

Die Förderbehälter sind insbesondere Hängetaschen, die hängend in einer Hängeförderanlage transportiert werden. Derartige Hängetaschen sind beispielsweise bekannt aus DE 10 2018 201 675 A1, die insbesondere mittels Rolladapter jeweils vereinzelt entlang einer Förderschiene förderbar sind. Bezüglich des Rolladapters, insbesondere dessen Aufbau und Funktionalität, wird auf EP 1 690 811 A1 verwiesen. Die Hängetaschen ermöglichen eine flexible und vereinzelte Förderung der Waren. Insbesondere sind die Hängetaschen für die Förderung verschiedenartiger Artikel geeignet. Die Hängetaschen sind insbesondere automatisiert öffenbar und/oder automatisiert schließbar.

Ein Beladeverfahren gemäß Anspruch 2 ermöglicht einen erhöhten Automatisierungsgrad. Nach dem Beladen werden die beladenen Förderbehälter, insbesondere automatisiert, abtransportiert. Insbesondere wird der Beladevorgang, also das Abgeben der ersten Waren in die Förderbehälter, automatisch erkannt, insbesondere sensorisch, insbesondere optisch, insbesondere mittels einer Lichtschranke und/oder mittels eines Lichtvorhangs.

Ein Beladeverfahren gemäß Anspruch 3 ermöglicht eine automatisierte Beladung der Förderbehälter.

Es ist alternativ möglich, die Förderbehälter manuell zu beladen.

Ein Beladeverfahren gemäß Anspruch 4 reduziert Unterbrechungen und/oder Stillstandzeiten im Warenstrom beim Beladen. Die zu beladenden Förderbehälter werden für den Beladevorgang an einer Beladeposition bereitgestellt und insbesondere automatisch geöffnet. Die Förderbehälter können alternativ auch manuell geöffnet werden.

Ein Beladeverfahren gemäß Anspruch 5 vereinfacht die nachfolgende Handhabung und insbesondere die Sortierung der ersten Waren für einen Kommissionierprozess. Die ersten Waren können insbesondere vereinzelt in einer Hängeförderanlage gefördert und gehandhabt werden. Eine zielgerichtete Förderung der ersten Waren in der Hängeförderanlage ist dadurch verbessert.

Es ist alternativ möglich, mehrere erste Waren in einem Förderbehälter zu transportieren. Es kann beispielsweise vorteilhaft sein, mehrere identische erste Waren in einem Förderbehälter zu transportieren. Das Beladen erfolgt in diesem Fall artikelrein. Alternativ können auch mehrere unterschiedliche erste Waren in einem Förderbehälter gefördert werden. Vorteilhaft ist es, wenn die unterschiedlichen Waren beispielsweise ein und demselben Auftrag zugeordnet sind. Das Beladen erfolgt in diesem Fall auftragsorientiert.

Ein manuelles Vereinzeln gemäß Anspruch 6 ist effizient. Es wurde erkannt, dass die manuelle Vereinzelungsleistung einer Bedienperson größer und insbesondere deutlich größer ist, als eine automatisierte Erkennungsleistung, die Ausschleuseleistung und/oder die Belade-leistung. Es ist dadurch insbesondere möglich, an den Vereinzelungsplatz mehrere Erkennungsplätze anzuschließen, die insbesondere parallel zueinander angeordnet sind. Der an dem Vereinzelungsplatz ankommende Warenstrom kann auf mehrere Erkennungsplätze aufgeteilt werden, an die jeweils ein Ausschleuseplatz und ein Beladeplatz angeschlossen sind. Dadurch kann die Gesamtdurchsatzrate für das Beladeverfahren skaliert und dadurch gesteigert werden.

Alternativ ist auch eine maschinelle und insbesondere automatisierte Vereinzelung möglich, insbesondere mittels eines Handhabungsgeräts, beispielsweise in Form eines Industrieroboters. Ein derartiges Verfahren ist insbesondere voll automatisiert möglich. Menschliche Interaktionen sind entbehrlich. Dies ist insbesondere in sicherheitsrelevanten und/oder für Menschen gefährlichen oder gesundheitsgefährdenden Umgebungen vorteilhaft.

Ein automatisiertes Klassifizieren der Waren gemäß Anspruch 7 erhöht den Automatisierungsgrad.

Ein Klassifizieren der Waren gemäß Anspruch 8 weist eine erhöhte Klassifizierungsleistung auf. Die erkannten Waren werden anhand ihrer Wareneigenschaften, insbesondere anhand von Wertetabellen klassifiziert, die beispielsweise in einer Steuerungseinheit gespeichert sein können. Zusätzlich oder alternativ kann die Klassifizierung anhand von eindeutigen Identifizierungscodes erfolgen, insbesondere instantan, weil die Zulässigkeit der Waren Bestandteil der Wareneigenschaften ist, die in dem Identifizierungscode hinterlegt ist.

Ein Beladeverfahren gemäß Anspruch 9 weist einen erhöhten Automatisierungsgrad auf. Insbesondere kann die Durchsatzrate insgesamt dadurch gesteigert werden.

Ein Beladeverfahren gemäß Anspruch 10 vermeidet einen Rückstau ausgeschleuster Waren und damit eine Beeinträchtigung des Beladeverfahrens selbst. Als Abfördertechnik für die ausgeschleusten zweiten Waren dient insbesondere ein Förderband, das die automatisierte Abförderung vereinfacht. Alternativ oder zusätzlich ist auch ein manueller Abtransport der ausgeschleusten Waren möglich, beispielsweise mittels Förderbehältern, Rollcontainern und/oder Gitterboxen. Eine automatisierte Abförderung ist auch mittels autonomer Fahrzeuge denkbar.

Eine Beladestation gemäß Anspruch 11 weist im Wesentlichen die Vorteile des Beladeverfahrens gemäß Anspruch 1 auf, worauf hiermit verwiesen wird.

Wesentlich ist, dass am Erkennungsplatz eine Erkennungseinheit angeordnet ist, die zum automatisierten Erkennen der vereinzelten Waren dient. Die Erkennungseinheit vereinfacht das Erkennen der Waren, insbesondere nach individuellen Kriterien wie Abmessungen, insbesondere Länge, Breite und/oder Höhe oder Durchmesser, Form der Ware, Gewicht der Ware, Artikelnummer und/oder ein Identifizierungscode. Die Erkennungseinheit ist insbesondere ein optischer Sensor, insbesondere eine Kamera, insbesondere ein Kamerasystem zur dreidimensionalen Warenerfassung, eine integrierte Waage und/oder ein Lesegerät zum automatisierten Lesen des Identifizierungscodes. Das Lesegerät ist insbesondere ein Barcodeleser, ein QR-Codeleser und/oder ein Transponder zum Lesen eines RFID-Speicherchips.

Die erfindungsgemäße Beladestation umfasst die Zuführeinheit zum Zuführen des Warenstroms, einen der Zuführeinheiten in Warenförderrichtung nachgelagerten Vereinzelungsplatz, an dem die Waren vereinzelt werden, und einen, insbesondere an den Erkennungsplatz fördertechnisch gekoppelten, Ausschleuseplatz, an dem die zweiten Waren aus dem Warenstrom ausgeschleust werden. An den Ausschleuseplatz ist fördertechnisch ein Beladeplatz gekoppelt, an dem die Förderbehälter mit den ersten Waren geladen werden.

Eine fördertechnische Kopplung des Vereinzelungsplatzes gemäß Anspruch 12 ermöglicht eine Pufferung von Waren zwischen dem Erkennungsplatz und dem Vereinzelungsplatz. Die fördertechnische Kopplung erfolgt insbesondere mit einem Förderband, das auch als Pufferband bezeichnet wird.

Alternativ ist es auch möglich, den Vereinzelungsplatz und den Erkennungsplatz kombiniert auszuführen. Der Vereinzelungsplatz und der Erkennungsplatz sind in diesem Fall insbesondere aus Platzgründen integriert ausgeführt. Insbesondere ist bei der kombinierten Anordnung die Erkennungseinheit unmittelbar am Vereinzelungsplatz angeordnet, insbesondere oberhalb eines Arbeitsbereichs der Bedienperson oder eines entsprechenden Handhabungsgeräts. Dabei ist die Erkennungseinheit insbesondere derart ausgeführt, dass sie während der Vereinzelung durch die Bedienperson und/oder das Handhabungsgerät die vereinzelten Waren erkennen kann. Der Erkennungsprozess wird insbesondere dadurch verbessert, dass beim Vereinzeln die Waren in eine definierte Orientierung gebracht werden, um insbesondere das Lesen des Identifizierungscodes zu ermöglichen und/oder die individuellen Kriterien zu erfassen. Eine derartige Beladestation ist besonders platzsparend ausgeführt. Eine alternative platzsparende Ausführung ist auch dadurch möglich, dass der Erkennungsplatz unmittelbar am Vereinzelungsplatz anschließt. In diesem Fall ist keine zusätzliche und/oder separate Fördertechnik zwischen dem Vereinzelungsplatz und dem Erkennungsplatz vorhanden. Es wird insbesondere erkannt, dass durch die Vereinzelung durch die Bedienperson und/oder ein Handhabungsgerät eine integrierte Förderung zu dem Erkennungsplatz hin ohnehin erfolgt, so dass eine separate Fördertechnik entbehrlich ist.

Eine Ausschleusefördertechnik gemäß Anspruch 13 vereinfacht das Ausschleusen der zweiten Waren. Die Ausschleusefördertechnik umfasst insbesondere ein Ausschleuseelement und ermöglicht eine Querförderung in einer Richtung quer, beispielsweise unter einer mit 30 ° oder mit 45 ° bezüglich der Förderrichtung des Warenstroms geneigten Richtung, und insbesondere senkrecht zu der Förderrichtung des Warenstroms hin zu dem Beladeplatz. Diese Querförderung erfolgt insbesondere durch einen sogenannten Pusher, der insbesondere pneumatisch betätigt wird, eine Kippschale, einen Quergurt, eine Fallklappe und/oder einen vertikal schwenkbaren Förderer. Insbesondere steht die Ausschleusefördertechnik mit der Erkennungseinheit in Signalverbindung. Eine von der Erkennungseinheit als zweite Ware erkannte Ware kann mittels eines entsprechenden Stellsignals an der Ausschleusefördertechnik automatisiert ausgeschleust werden.

Aus Platzgründen ist es besonders vorteilhaft, wenn der Erkennungsplatz am Ausschleuseplatz integriert ist. In diesem Fall ist der Erkennungsplatz durch Integration fördertechnisch mit dem Ausschleuseplatz gekoppelt. Dies kann beispielsweise dadurch erfolgen, dass die für die Erkennung erforderliche Erkennungseinheit oberhalb des kombinierten Ausschleuse-/Erkennungsplatzes angeordnet ist, wobei das Ausschleuseelement im Wesentlichen horizontal und quer zur Förderrichtung des Warenstroms ausschleust. Diese kombinierte Ausgestaltung ist besonders platzsparend. Die zweiten Waren werden an dem Platz ausgeschleust, an dem sie erkannt und identifiziert werden.

Eine Beladestation gemäß Anspruch 14 ermöglicht das automatisierte Abgeben der ersten Waren in die Förderbehälter. Als Beladefördertechnik dient insbesondere ein Förderband. Dadurch ist insbesondere ein gezieltes Abgeben, insbesondere zeitgesteuert, in die Förderbehälter möglich. Eine Beladefördertechnik kann auch als Förderrutsche ausgeführt sein, um eine schwerkraftbedingte Abgabe der ersten Waren in die Förderbehälter zu ermöglichen. Eine derartige Förderrutsche ist unkompliziert ausgeführt und kann insbesondere ein Stoppelement, insbesondere eine automatisiert betätigbare Klappe, aufweisen, um die schwerkraftbedingte Förderung gezielt anzuhalten.

Die Beladefördertechnik steht insbesondere mit der Erkennungseinheit und/oder mit einer Zuführ-Fördertechnik der zu beladenden Förderbehälter in Signalverbindung. Dadurch ist insbesondere gewährleistet, dass ein automatisiertes Beladen fehlerfrei funktioniert und insbesondere die ersten Waren an die Förderbehälter nur dann abgegeben werden, wenn auch ein zu beladender Förderbehälter bereitsteht.

Eine Beladestation gemäß Anspruch 15 ermöglicht insbesondere eine vollautomatisierte Beladung der Förderbehälter. Eine Steuerungseinheit steht insbesondere mit der Erkennungseinheit in Signalverbindung. Zusätzlich oder alternativ kann die Steuerungseinheit mit der Ausschleusefördertechnik, mit der Beladefördertechnik, mit der Zuführ-Fördertechnik der Förderbehälter und/oder eine Vereinzelungseinheit in Form eines Handhabungsgeräts oder eines Industrieroboters in, insbesondere bidirektionaler, Signalverbindung stehen.

Sowohl die in den Patentansprüchen angegebenen Merkmale, als auch die in dem nachfolgenden Ausführungsbeispiel der erfindungsgemäßen Beladestation angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, vorteilhafte Ausgestaltungen und Einzelheiten der Erfindung ergeben sich aus der nachfolgenden Beschreibung eines Ausführungsbeispiels anhand der Zeichnung. Es zeigt:

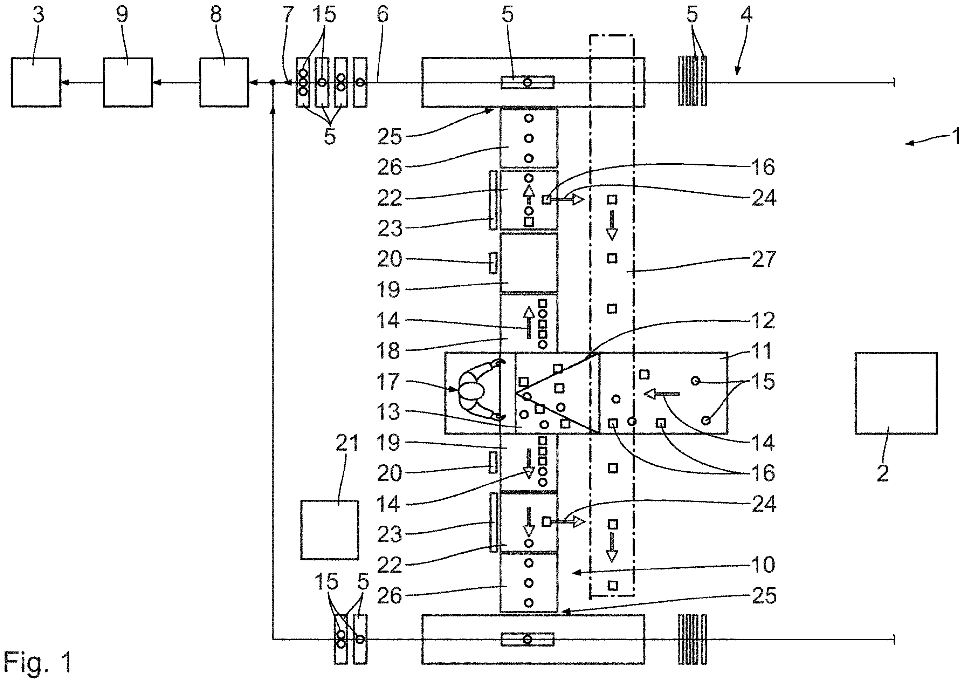

- Fig. 1: eine schematische Ansicht von oben auf eine erfindungsgemäße Beladestation für eine Förderanlage in Form einer Hängeförderanlage.

Eine insgesamt mit 1 gekennzeichnete Förderanlage dient zum Fördern von Waren von einem Wareneingang 2 zu einem Warenausgang 3. Für die Förderung der Waren zu dem Warenausgang 3 dient eine Fördertechnik 4, mit der Förderbehälter 5 automatisiert und vereinzelt gefördert werden. Gemäß dem gezeigten Ausführungsbeispiel sind die Förderbehälter Hängetaschen, wie sie beispielsweise aus DE 10 2018 201 675 A1 bekannt sind, worauf hiermit ausdrücklich verwiesen wird bezüglich deren Aufbau und ihrer Funktion.

Die Hängetaschen werden entlang einer Förderschiene 6 mittels eines nicht näher dargestellten Förderantriebs an nicht näher dargestellten Rolladaptern hängend gefördert. Bezüglich des Aufbaus und der Funktion der Rolladapter wird ausdrücklich auf EP 1 690 811 A1 verwiesen. Die Förderanlage 1 ist insbesondere eine Hängeförderanlage.

Entlang der Förderschienen 6 können stromabwärts der Förderbehälter-Förderrichtung 7 mindestens ein Pufferspeicher 8 und/oder mindestens eine Sortiereinrichtung 9, insbesondere mit mehreren Sortierbahnen, angeordnet sein. Insbesondere ist bezüglich der Förderbehälter-Förderrichtung 7 stromaufwärts des Warenausgangs 3 mindestens eine Packstation mit mindestens einem Packplatz vorhanden, an dem die Waren aus den Förderbehältern 5 entladen, und insbesondere auftragsorientiert, versandfertig gemacht, insbesondere verpackt, werden. Alternativ kann eine unaufwändige Sortierung insbesondere mittels automatisch öffenbarer Förderbehälter 5 erfolgen, indem die Förderbehälter 5 über verschiedene Zielbehälter gefördert werden und die Waren auftragsbezogen in die jeweiligen Zielbehälter abgegeben werden. Es sind auch andere Sortierverfahren möglich.

Die versandfertigen Waren werden von dem Warenausgang 3 aus versendet und aus der Förderanlage 1 abgegeben.

Um die Waren an die Fördertechnik 4 aufzugeben, dient eine insgesamt mit 10 gekennzeichnete Beladestation. Die Beladestation 10 weist eine Zuführeinheit 11 auf, die insbesondere eine Zuführfördertechnik aufweist. Die Zuführfördertechnik kann beispielsweise ein Förderband, insbesondere ein Gurtband, aufweisen, um Waren automatisiert zuzuführen, insbesondere einzeln, in Gebinden und/oder in Förderbehältnissen. Es ist auch denkbar, dass die Waren, die in einem Behälter angefördert werden, an der Zuführeinheit 11 entladen, insbesondere ausgekippt, werden. Die Zuführeinheit 11 umfasst insbesondere eine Rutsche 12 und/oder ein Förderband zum Zuführen des Warenstroms zu einem Vereinzelungsplatz 13. Die Zuführung der Waren erfolgt entlang einer Warenförderrichtung 14. Der Vereinzelungsplatz 13 ist der Zuführeinheit 11 in Warenförderrichtung 14 nachgelagert.

Der Warenstrom umfasst erste Waren 15, die in Fig.1 in einem Kreissymbol dargestellt sind, und zweite Waren 16, die in Fig. 1 mit einem Rechtecksymbol dargestellt sind. Jeweils identische Symbole für die ersten Waren 15 und die zweiten Waren 16 bedeutet nicht, dass es sich um identische Artikel handelt. Die Einteilung in erste Waren 15 und zweite Waren 16 bedeutet, dass die ersten Waren 15 für das Beladen in die Förderbehälter 5 der Fördertechnik 4 zulässig sind und die zweiten Waren 16 für das Beladen in die Förderbehälter 5 unzulässig sind. Dabei können sich erste Waren 15 voneinander unterscheiden, also beispielsweise unterschiedliche Bekleidungsartikel oder andere Waren sein. Die Waren 15, 16 sind in dem Warenstrom umsortiert und insbesondere nicht vereinzelt angeordnet.

An dem Vereinzelungsplatz sorgt eine Bedienperson 17 für das Vereinzeln der Waren 15, 16 des Warenstroms. Zusätzlich oder alternativ zu der Bedienperson 17 ist auch eine automatisierte Vereinzelung am Vereinzelungsplatz 13 möglich, insbesondere mittels eines entsprechenden Handhabungsgeräts, insbesondere eines Industrieroboters. Die an dem Vereinzelungsplatz 13 vereinzelten Waren 15, 16 werden vereinzelt und mittels eines Förderbands 18 vereinzelt an einen Erkennungsplatz 19 gefördert. Durch das Vereinzeln sind die Waren 15, 16 entlang der Warenförderrichtung 14 hintereinander und insbesondere in Warenförderrichtung 14 beabstandet zueinander angeordnet. Dadurch ist sichergestellt, dass eine sequentielle Erkennung der Waren 15, 16 an dem Erkennungsplatz 19 durchgeführt werden kann. An dem Erkennungsplatz 19 ist eine Erkennungseinheit 20 angeordnet, die ein automatisiertes Erkennen der Waren 15, 16 ermöglicht. Die Erkennungseinheit 20 ist insbesondere eine Kamera, eine Waage und/oder ein Lesegerät zum Lesen eines Identifizierungscodes, insbesondere eines Barcodes, eines QR-Codes, eines RFID-Chips und/oder einer Artikelnummer.

Wie in Fig. 1 gezeigt, wird der Warenstrom an dem Vereinzelungsplatz 13 durch die Bedienperson 17 in zwei Teil-Warenströme aufgeteilt, von der Bedienperson 17 aus gesehen nach links und nach rechts. Die Waren 15, 16 des nach links orientierten Teil-Warenstroms werden von der Bedienperson 17 auf das Förderband 18 abgegeben und mit dem Förderband 18 zu dem Erkennungsplatz 19 abgefördert. Die Waren des nach rechts gerichteten Teil-Warenstroms werden von der Bedienperson 17 unmittelbar an den Erkennungsplatz 19 abgegeben. Ein separates Förderband 18 ist zwischen dem Vereinzelungsplatz 13 und dem sich nach rechts anschließenden Erkennungsplatz 19 nicht vorhanden. Die Waren 15, 16 werden von der Erkennungseinheit 20 automatisiert erkannt. Dazu kann der vereinzelte Warenstrom kurzzeitig angehalten werden, um die Zuverlässigkeit des Erkennungsprozesses zu verbessern. Die Erkennungseinheit 20 kann aber auch derart fehlerrobust ausgeführt sein, dass ein Anhalten des Warenstroms an der Erkennungseinheit 20 entbehrlich ist und der Erkennungsprozess insbesondere "im Vorbeifahren" der Waren 15 und 16 erfolgt.

Die Erkennungseinheit 20 ist insbesondere mit einer rein schematisch dargestellten Steuerungseinheit 21 in bidirektionaler Signalverbindung. Die Erkennungseinheit 20 kann aber auch so programmiert sein, dass sie ein Stellsignal "Ausschleusen" oder "Durchfahren" ausgibt. In diesem Fall ist eine unidirektionale Signalverbindung zwischen der Erkennungseinheit 20 und der Steuerungseinheit 21 ausreichend. Die Signalverbindung kann kabelgebunden oder kabellos erfolgen. Gemäß dem Ausführungsbeispiel ist die Signalverbindung kabellos, insbesondere mittels Funksignal ausgeführt.

Bezüglich der Warenförderrichtung 14 ist stromabwärts zu dem Erkennungsplatz 19 ein Ausschleuseplatz 22 angeordnet. Der Ausschleuseplatz 22 ist fördertechnisch mit dem Erkennungsplatz 19 gekoppelt. An dem Ausschleuseplatz 22 ist eine Ausschleusefördertechnik 23 mit einem Ausschleuseelement in Form eines Querförderers angeordnet. Die Ausschleusefördertechnik 23 ermöglicht eine Querförderung der Waren 16 entlang einer Querrichtung 24, die quer und insbesondere senkrecht zur Warenförderrichtung 14 orientiert ist.

An den Ausschleuseplatz 22 ist fördertechnisch ein Beladeplatz 25 gekoppelt. An dem Beladeplatz 25 ist die Beladestation 10 fördertechnisch an die Fördertechnik 4 gekoppelt. Insbesondere ist an dem Beladeplatz 25 eine Beladefördertechnik 26 angeordnet, die eine Beladeförderung ermöglicht. Insbesondere ist die Beladefördertechnik 26 derart ausgeführt, dass die Waren 15 automatisiert in die am Beladeplatz 25 bereitgestellten Förderbehälter 5 abgegeben, also in die Förderbehälter 5 beladen werden können. Die Beladefördertechnik 26 kann eine zu der Fördertechnik 4 hin geneigte Rutsche und/oder ein Förderband sein.

Besonders vorteilhaft ist, wenn die Steuerungseinheit 21 mit weiteren Komponenten der Beladestation 10 und/oder der Fördertechnik 4 in Signalverbindung steht. Insbesondere steht die Steuerungseinheit 21 mit der Ausschleusefördertechnik 22, der Beladefördertechnik 26 und/oder mit der Fördertechnik 4, insbesondere dem Förderantrieb, in Signalverbindung.

An die Ausschleusefördertechnik 23 ist eine Abfördertechnik 27 fördertechnisch gekoppelt. Die Abfördertechnik 27 ist insbesondere ein Förderband, das zum Abfördern von mittels der Ausschleusefördertechnik 23 ausgeschleuster Waren 16 dient. Die Abfördertechnik 27 ist insbesondere im Wesentlichen parallel zu den Teil-Warenströmen in der Beladestation 10 orientiert. Die Abfördertechnik 27 ist in vertikaler Richtung unterhalb der Zuführeinheit 11 hindurchgeführt. Diese Anordnung ist besonders kompakt und platzsparend. Selbstverständlich sind auch andere Ausführungen und/oder Anordnungen der Abfördertechnik 27, insbesondere bezüglich der Zuführeinheit 11, möglich.

Nachfolgend wird anhand von Fig. 1 ein Beladeverfahren für die Förderbehälter 5 mittels der Beladestation 10 näher erläutert.

Ein durchmischter Warenstrom mit ersten Waren 15 und zweiten Waren 16 wird entlang der Warenförderrichtung 14 mittels der Zuführeinheit 11 dem Vereinzelungsplatz 13 zugeführt. Die Bedienperson 17 und/oder ein nicht dargestelltes Handhabungsgerät vereinzeln die Waren 15, 16. Insbesondere werden die vereinzelten Waren 15, 16 auf das Förderband 18 und anschließend an den Erkennungsplatz 19 und/oder unmittelbar an den Erkennungsplatz 19 abgegeben. An dem Erkennungsplatz 19 werden die Waren 15, 16 automatisiert erkannt. Die erkannten Waren werden automatisiert in erste Waren 15, die für das Beladen der Förderbehälter 5 zulässig sind, und zweite Waren 16, die für das Beladen der Förderbehälter 5 unzulässig sind, klassifiziert. Die Klassifizierung erfolgt automatisiert und insbesondere mittels der Steuerungseinheit 21.

Der vereinzelte Warenstrom wird entlang der Warenförderrichtung 14 zu dem jeweiligen Ausschleuseplatz 22 gefördert. Erste Waren 15 passieren den Ausschleuseplatz 22 zu dem Beladeplatz 25. Zweite Waren 16 werden an dem Ausschleuseplatz 22 mittels der Ausschleusefördertechnik 23 in Querrichtung 24 auf die Abfördertechnik 27 ausgeschleust. Dazu erhält die Ausschleusefördertechnik 23 ein entsprechendes, von der Steuerungseinheit 21 erzeugtes Stellsignal. Das Stellsignal wird in der Steuerungseinheit 21 auf Basis der von der Erkennungseinheit 20 übermittelten Daten erzeugt. Die ausgeschleusten zweiten Waren 16 werden mittels der Abfördertechnik 27, insbesondere von der Beladestation 10 weg, gefördert. Die ausgeschleusten zweiten Waren 16 werden insbesondere sortiert, insbesondere manuell und/oder mittels eines geeigneten automatischen Sortiersystems. Die sortierten zweiten Waren 16 können insbesondere wieder eingelagert und/oder beispielsweise zu dem Wareneingang 2 rückgeführt werden. Sofern die zweiten Waren 16 deshalb unzulässig sind, weil sie in der derzeit aktiven Welle noch nicht verarbeitet werden können, aber grundsätzlich für die Förderung in dem Förderbehälter 5, insbesondere zu einem späteren Zeitpunkt, geeignet sind, können diese zweiten Waren 16 beispielsweise in einem dafür vorgesehenen Pufferspeicher zwischengespeichert und zu einem späteren Zeitpunkt dem Vereinzelungsplatz 13 erneut zugeführt werden.

Der durch die zweiten Waren 16 ausgedünnte Warenstrom am Beladeplatz 25 umfasst ausschließlich erste Waren 15. Die ersten Waren 15 werden am Beladeplatz 25, insbesondere mittels der Beladefördertechnik 26 automatisiert in die Förderbehälter 5 abgegeben. Für den Beladevorgang werden die Förderbehälter 5 insbesondere in eine Beladeposition gedreht, die gegenüber der Transportposition bezüglich einer Vertikalachse um 90° gedreht ist. In der Beladeposition ist das Beladen der Förderbehälter 5 vereinfacht und insbesondere fehlerunanfällig möglich. In die Förderbehälter 5 wird jeweils mindestens eine und insbesondere genau eine erste Ware 15 geladen.

Es können auch mehrere erste Waren 15 je Förderbehälter 5 transportiert werden. Die verschiedenen Förderstränge der Fördertechnik können stromabwärts der Beladestation 10 wieder zusammengeführt werden, insbesondere stromaufwärts der Pufferspeicher 8, der Sortiereinrichtung 9 und/oder der Packplätze.

Nach dem Beladen werden die Förderbehälter 5 in die Transportposition um 90° bezüglich der vertikalen Achse zurückgedreht.

## Patentansprüche

1. Beladeverfahren für Förderbehälter (5) mit Waren (15, 16) aus einem Warenstrom umfassend die Verfahrensschritte
- Zuführen des Warenstroms an einen Vereinzelungsplatz (13), wobei der Warenstrom erste Waren (15) und zweite Waren (16) umfasst, wobei die ersten Waren (15) für das Beladen in die Förderbehälter (5) zulässig sind und wobei die zweiten Waren (16) für das Beladen in die Förderbehälter (5) unzulässig sind,
- Vereinzeln der Waren (15, 16),
- automatisiertes Erkennen der vereinzelten Waren (15, 16),
- Ausschleusen der zweiten Waren (16) aus dem Warenstrom,
- Beladen der Förderbehälter (5) mit den ersten Waren (15).

2. Beladeverfahren gemäß Anspruch 1, **dadurch gekennzeichnet, dass** das Beladen automatisiert erfolgt, insbesondere gesteuert mittels einer Steuerungseinheit (21).

3. Beladeverfahren gemäß einem der vorstehenden Ansprüche, **dadurch gekennzeichnet, dass** die ersten Waren (15) mittels einer Beladefördertechnik (26) in die Förderbehälter (5) abgegeben werden.

4. Beladeverfahren gemäß einem der vorstehenden Ansprüche, **dadurch gekennzeichnet, dass** die zu beladenden Förderbehälter (5), insbesondere automatisch geöffnet, an einer Beladeposition bereitgestellt werden.

5. Beladeverfahren gemäß einem der vorstehenden Ansprüche, **dadurch gekennzeichnet, dass** die Förderbehälter (5) jeweils mit genau einer ersten Ware (15) beladen werden.

6. Beladeverfahren gemäß einem der vorstehenden Ansprüche, **dadurch gekennzeichnet, dass** das Vereinzeln manuell erfolgt.

7. Beladeverfahren gemäß einem der vorstehenden Ansprüche, **dadurch gekennzeichnet, dass** die erkannten Waren (15, 16) automatisiert klassifiziert werden.

8. Beladeverfahren gemäß Anspruch 7, **dadurch gekennzeichnet, dass** das Klassifizieren der erkannten Waren (15, 16) anhand von Wareneigenschaften, insbesondere von mindestens einer Abmessung und/oder von der Masse, und/oder anhand eines Identifizierungscodes, insbesondere eines Barcodes, QR-Codes und/oder eines auslesbaren Speicherchips, erfolgt.

9. Beladeverfahren gemäß einem der vorstehenden Ansprüche, **dadurch gekennzeichnet, dass** das Ausschleusen der zweiten Waren (16) aus dem Warenstrom automatisiert erfolgt.

10. Beladeverfahren gemäß einem der vorstehenden Ansprüche, **dadurch gekennzeichnet, dass** die ausgeschleusten zweiten Waren (16) mittels einer Abfördertechnik (27) abgefördert werden.

11. Beladestation für Förderbehälter (5) umfassend
a. eine Zuführeinheit (11) zum Zuführen eines Warenstroms, der erste Waren (15) und zweite Waren (16) umfasst, wobei die ersten Waren (15) für das Beladen in den Förderbehälter (5) zulässig sind und wobei die zweiten Waren (16) für das Beladen in den Förderbehälter (5) unzulässig sind,
b. ein der Zuführeinheit (11) in Warenförderrichtung (14) nachgelagerter Vereinzelungsplatz (13) zum Vereinzeln der Waren (15, 16),
c. ein Erkennungsplatz (19) mit einer Erkennungseinheit (20) zum automatisierten zum Erkennen der vereinzelten Waren (15, 16),
d. ein Ausschleuseplatz (22) zum Ausschleusen der zweiten Waren (16) aus dem Warenstrom,
e. ein an den Ausschleuseplatz (22) fördertechnisch gekoppelter Beladeplatz (25) zum Beladen der Förderbehälter (5) mit den ersten Waren (15).

12. Beladestation gemäß Anspruch 11, **dadurch gekennzeichnet, dass** der Erkennungsplatz (19) fördertechnisch an den Vereinzelungsplatz (13) gekoppelt ist.

13. Beladestation gemäß Anspruch 11 oder 12, **gekennzeichnet durch** eine am Ausschleuseplatz (22) angeordnete Ausschleusefördertechnik (23) zum automatisierten Ausschleusen der zweiten Waren (16).

14. Beladestation gemäß einem der Ansprüche 11 bis 13, **gekennzeichnet durch** eine am Beladeplatz (25) angeordnete Beladefördertechnik (26) zum automatisierten Abgeben der ersten Waren (15) in die Förderbehälter (5).

15. Beladestation gemäß einem der Ansprüche 11 bis 14, **gekennzeichnet durch** eine Steuerungseinheit (21), die mit der Erkennungseinheit (20) in Signalverbindung steht.
